# EUROPEAN PATENT APPLICATION

(11) **EP 1 675 026 A2**
(43) Date of publication of application: **28.06.2006**
(21) Application number: 05270040.8
(22) Date of filing: 11.08.2005
(51) Int. Cl.: G06F 17/30

(54) **Arrangement enabling thin client to access and present data in custom defined reports**

(30) Priority: 22.12.2004 US 638291 P; 10.02.2005 US 54877
(71) Applicant: AT&T Corp., New York, NY 10013-2412 (US)
(72) Inventor: AFTAB, Syed, Anwar, 07950, New Jersey (US); BELANGER, David, 08844, New Jersey (US); PARKER, Sam, 08512, New Jersey (US); PISHMANOV, Stanislav, 07310, New Jersey (US); PUTHENPURA, Sarat, 07922, New Jersey (US)
(74) Representative: Asquith, Julian Peter

(57) **Abstract**

A report definition file (FIG. 7) that is in XML format governs access to and presentation of data from a domain database 364. The report definition file may be created by inputting from a thin client 200 (such as a web browser) a set of report specifications, and converting the set of report specifications into the XML-format report definition file. The thin client 200 may input the report specifications through a definition wizard 314 (step 502), or by direct entry of SQL commands that are interpreted by an SQL builder 332 (step 512). The report definition file is converted to SQL (step 606) to allow retrieval of the data for output to thin client 200.

## Description

### CROSS-REFERENCE TO RELATED APPLICATION

This patent application claims priority to related U.S. provisional Application No. 60/638,291, filed December 22, 2004, the contents of which are incorporated herein by reference in their entirety.

### BACKGROUND OF THE INVENTION

### 1. Field of the Invention

The invention generally relates to arrangements for generating reports of data selected from a database. More particularly, the invention relates to arrangements for enabling users in remote locations to use a thin client (for example, a web browser) to selectively access a database using custom drill-down parameters and to generate custom defined reports.

### 2. Related Art

Conventionally, end users of enterprise information systems are presented with a predetermined set of functionality to access data from databases. Usually, a set of predefined reports is limited to executing with variable parameters on fixed data sets. Often, however, the end users have needs beyond that, including the ability to create their own business intelligence reports from heterogeneous data sources, or to modify existing reports in order to adapt them for specific organizational needs. Depending on the specific user's technical proficiency, needs vary from a simple visual user report definition interface to a complex feature-rich interface with the ability to use Standard Query Language (SQL) declarations.

Particularly in data warehousing and online analytical processing (OLAP) environments, the ability to drill down to a more detailed subset of data is often needed. For example, OLAP, generally understood to involve analysis of complex data from a data warehouse, has conventionally involved a complex computing systems, or even distributed computing systems, that require substantial computing power.

To reduce client side costs, it would be desirable that such capabilities be provided through simpler interface. However, known simple interfaces suffer from reduced interactivity compared to traditional desktop client/server applications. And unfortunately, such desktop client/server applications are complex, costly and difficult to maintain.

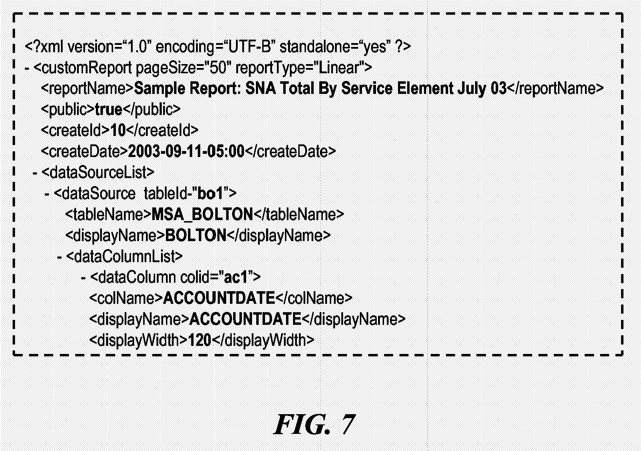

U.S. Patent No. 2004/0133552 (Greenfield *et al*.) discloses an arrangement for analytical programming in which an online analytical processing (OLAP) application 101 can be deployed in a thin client or a thick client configuration (see also U.S. Patent No. 6,684,207 (also to Greenfield *et al*.)). U.S. Patent Application Publication No. 2002/0091681 (Cras *et al*.) discloses creation of an analytical report on top of a multidimensional data model built on top of a relational or multidimensional database, in which a structure A1 (Cras' FIG. 7) may be a thin client (see Cras' [0161]) as part of "report then query" report creation. However, none of the conventional art is believed to provide the functionality and flexibility that is required while using a thin client.

Thus, especially to increase productivity and reduce OLAP/data warehouse development and operations cost, there is a need in the art for an arrangement allowing business and technical users to easily create reports of their own design, and to make the reports available securely to other users. Further, there is a need to provide these abilities using a simple interface (even a thin client interface), preferably without any plug-in or downloaded control mechanisms.

### SUMMARY

A report definition file that is in (for example) XML format governs access to and presentation of data from a domain database. The report definition file may be created by inputting from a thin client (such as a web browser) a set of report specifications, and converting the set of report specifications into the report defmition file. The thin client may input the report specifications through a definition wizard, or by direct entry of a database query language (for example, SQL) commands that are interpreted by a database query language. The report definition file is converted to the database query language to allow retrieval of the data for output to thin client.

### BRIEF DESCRIPTION OF THE DRAWINGS

A more complete appreciation of the described embodiments is better understood by reference to the following Detailed Description considered in connection with the accompanying drawings, in which like reference numerals refer to identical or corresponding parts throughout, and in which:

FIG. 1 illustrates a conventional architecture of an OLAP server allowing a client 100 to access a database 160 through a database management system;

FIG. 2 illustrates an arrangement in which a thin client 200, such as a web browser, creates a report definition to remotely access a database 260 through an analytical programming server 250;

FIG. 3 is a block diagram schematically illustrating one embodiment of server 250 (FIG. 2);

FIG. 4 is a high-level flowchart illustrating the steps of defining (creating) and generating (executing) a report;

FIGS. 5A and 5B are flowcharts of first and second embodiments of a method of defining (creating) reports whose definition are in XML format, using a thin client 200 such as a web browser; FIG. 5A's method involves definition wizard 314, and FIG. 5B's method involves direct SQL entry;

FIG. 6 is a flowchart of an embodiment of generating (executing) a report whose definition was stored in XML format;

FIG. 7 shows one example of an XML-format Report Definition file (of the type stored in blocks 508 or 518);

FIG. 8 illustrates one example of SQL that is automatically generated from an XML-format Report Definition file (as in block 606); and

FIG. 9 (illustrating the relationship of FIGS. 9A and 9B) is one example of a screen display through which SQL may be directly received from a user, to create and execute a report; the screen display also illustrates other "tabs" allowing a user to proceed stepwise through a report definition procedure such as one that may be governed by definition wizard 314.

### DETAILED DESCRIPTION

In describing embodiments illustrated in the drawings, specific terminology is employed for the sake of clarity. However, the invention is not intended to be limited to the specific terminology so selected, and it is to be understood that each specific element includes all technical equivalents that operate in a similar manner to accomplish a similar purpose. Various terms that are used in this specification are to be given their broadest reasonable interpretation when used to interpret the claims.

Moreover, features and procedures whose implementations are well known to those skilled in the art are omitted for brevity. For example, design, selection, and implementation of basic network elements and electronic circuit elements such as interfaces, signal level shifters, buffers, logic elements, communications links, and the like, lie within the ability of those skilled in the art, and accordingly any detailed discussion thereof may be omitted. Likewise, the steps involved in methods described herein may be readily implemented by those skilled in the art without undue experimentation. For example, database access and modification techniques, including programming in database management query languages, may be only briefly mentioned or illustrated, their details being easily surmised by skilled artisans. Thus, the steps involved in methods described herein may be readily implemented by those skilled in the art without undue experimentation.

Further, various aspects, features and embodiments of the arrangement may be described as a process that can be depicted as a flowchart, a flow diagram, a structure diagram, or a block diagram. Although a flowchart may describe the operations as a sequential process, many of the operations can be performed in parallel, concurrently, or in a different order than that described. Operations not needed or desired for a particular implementation may be omitted. A process or steps thereof may correspond to a method, a function, a procedure, a subroutine, a subprogram, and so forth, or any combination thereof.

As a background to understanding the embodiments described herein, the following definitions and examples are provided, with the understanding that the scope of the claims should not be limited thereby.

**• XML:** as used in this specification, Extensible Markup Language (XML) is meant to denote, not a specific version of an industry standard, but rather any markup language that supports nested structures and document-specific markup. That is, context tags (including semantic tags such as <sponsor> and document structure tags such as <paragraph>) and annotations may be nested within each other; tags may be uniquely defined for each document, as distinguished from, for example, HTML's set of universally recognized tags. More generally, a markup language describes the relationship between a documents structure and its content.

**• Tag:** a command inserted in a document that specifies how the document or portion thereof should be formatted or how its structure or meaning should be interpreted. Tags generally come in pairs: opening and closing tags that delimit a fragment of the document. In XML, unlike HTML, tags may be user defined and document-specific, such as <sponsor>...</sponsor>; such tags (including context tags) may be nested.

• **Markup:** characters and symbols (such as tags) that describe or give context to text that is associated with the markup (usually between opening and closing tags).

• Element: constitutes an opening tag, a corresponding closing tag, and intervening items. In XML, elements may be nested.

The present disclosed arrangement enables custom report definition targeting standard data sources, and generation of output in a user-determined format. Users have the ability to extract data from a predefined list of data sources, transform it into their layout of choice (text or graphical), and present it with a user-chosen formatting. The arrangement also enables predefined data drill-down paths for OLAP functionality.

The arrangement provides that reports are preserved, updated, and shared with other users based on individual user and group security permissions. Users specify predefined report schedules, and receive report execution notification alerts. All of these features are available to end users through a standard web interface such as a web browser, without requiring professional technical intervention.

The invention provides a unique juxtaposition of features that offers flexibility, scaling, and ease of use, as well as solving a problem that is common to many businesses. End users have the ability to perform a number of actions, including:

• Custom data defmition

• Custom text formatting

• Custom graphical formatting

• Data drill-down with custom parameterization

• Custom report security and access privileges

• Schedule an log report execution

• Other functions not specifically listed

All of these abilities are enabled using a thin client having a standard web interface such as Microsoft Internet Explorer, Netscape Navigator, Mozilla Firefox, Opera, Mosaic, NeoPlanet, or other web browser.

The concept of a "thin client" is believed to be well defined in the art. For purposes of this disclosure, a thin client may be considered to be a generally small, simple program or hardware device that has minimal required functionality and data processing abilities, and thus may rely on a server to provide most of the functionality and perform most of the data processing of the entire client-server system. It is possible, though not required for the present invention, for a thin client to have no disk drive, and provide a user interface and communications facility to the (fat) server. Here, it is understood that client devices may have functionality other than a mere web browser and may still fall within the present disclosure's use of term "thin client"; the term "thin client" is intended to mean that the functionality *required to perform the data access functions related to this invention* is performed by a small, simple program--even if the hardware device may happen to have other programs that are not required for such data access.

The arrangement may be implemented on a computer (server) or a cluster of computers, powered by software that executes the functionality described herein. The intelligence of the arrangement may be resident in software, and thus any suitable general purpose computers may be employed as hardware platforms. Accordingly, the hardware implementation may readily be made by those skilled in the art without undue experimentation based on the present disclosure, and a detailed discussion of the hardware involved in any given embodiment need only be briefly presented.

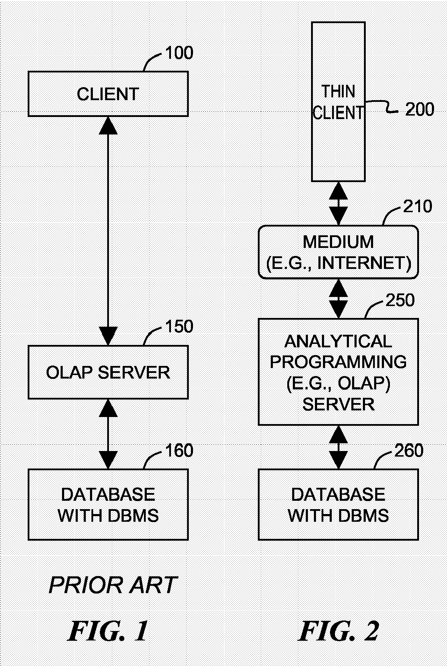

Generally, it is understood that tools such as online analytical processing (OLAP) tools allows users to analyze data from a database 160, and is often used in data mining applications. Referring to FIG. 1, an OLAP server 150 is shown disposed between a client 100 and a database management system (DBMS) that accesses the database 160. Conventionally, client 100 has required special purpose software to allow it to interface with server 150.

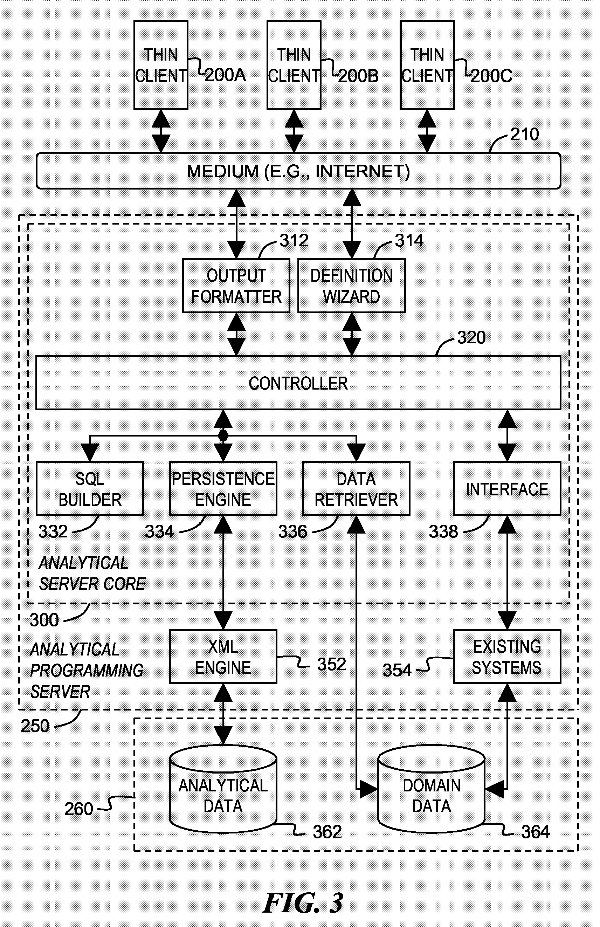

In contrast, the present arrangement allows the client to be a thin client. Referring to FIG. 2, an analytical programming server 250 is shown connected to a thin client 100 via a communications medium 210 such as the Internet. Analytical programming server 250 is also connected to a database management system (DBMS) that accesses a database 260. Software embodying the present invention may be resident in analytical programming server 250 (see especially FIG. 3), or distributed in other elements such as the DBMS, the database itself, or other database support elements.

The block diagram in FIG. 3 illustrates one use of the arrangement described herein. Thin clients 200A, 200B, 200C, and so forth, are shown connected to analytical programming server 250 via a communications medium 210 such as the world wide web (www) on the global Internet. In one embodiment, clients 200x are conventional web browsers resident on conventional general purpose computers. Of course, such clients are not precluded from having additional functionality.

FIG. 3 shows one embodiment, one that happens to be a modularized embodiment, that performs the methods disclosed herein. It is understood, of course, that the invention may be embodied in arrangements other than those specifically described.

Analytical programming server 250 is shown to include an analytical server core 300. Server core 250 may be implemented in software or firmware or hardware or any combination of thereof, it being understood that the invention may be implemented in ways other than as specifically illustrated in the example.

Within analytical programming server 250 are the following elements.

Output formatter 312 determines visual presentation of output data, and may be based on custom attributes determined from the user's inputs. Data is output in textual and/or graphical displays, and is exported in a variety of different formats. The output formatter provides interactive capabilities at the final report presentation level.

Definition wizard 314 is fully web-compatible and provides a visual interface for defining report attributes. The defmition wizard provides a step-by-step guiding process to users to define reports containing requested data.

Controller 320 implements overall integration of the other modules, facilitating communication between the modules and providing error-handling mechanisms as needed.

SQL builder 332 constructs Standard Query Language (SQL) based on definition attributes generated from user inputs. The SQL construction is fully automated, and allows the generated SQL to be viewed and approved by the user before it is submitted for execution. Moreover, the SQL builder supports custom parameters and drill-down extensions.

Persistence engine 334 preserves report definitions using a standard mechanism, preferably a user-defined (search-specific) language such as extensible markup language (XML). The persistence engine has a fully automated save-as-you-go fail-safe implementation. Additionally, the persistence engine includes integrated security verification.

Data retriever 336 interacts with application data sources to assemble and generate output data. The data retriever includes a large data system fail-safe mechanism.

Interface 338 provides integration with existing systems and frameworks, and includes a security plug-in and database connectivity integration.

Illustrated outside server core 300 but still within the analytical programming server 250 are XML engine 352 and a generic designation 354 for existing systems associated with serving database 260.

XML engine 352 performs the functions of interfacing (including storing, retrieving and processing OLAP report definitions) from analytical data store 362 and transforming the definitions into XML.

Existing systems block 354 includes other systems or application data sources with which the apparatus can be integrated to provide OLAP reporting capabilities.

Database 260 is understood to broadly encompass a variety of data and metadata, as well as analytical data created and used by the method described herein. Database element 260 may be implemented in a single database, or may designate plural distinct databases. For purposes of the present explanation, FIG. 3 shows an analytical data storage element 362 as being distinct from a domain data storage element 364, but it is understood that these storage elements may be combined in one storage element if desired.

Analytical data storage element 362 stores data such as XML report definitions and metadata that is required for storing, processing and executing OLAP reports.

Domain data storage element 364 stores the domain data, which is the data that is the subject of the client's searches.

Other data, not specifically mentioned herein, may also be stored in database element 260, either within the storage element(s) 362/364 or in one or more distinct database elements.

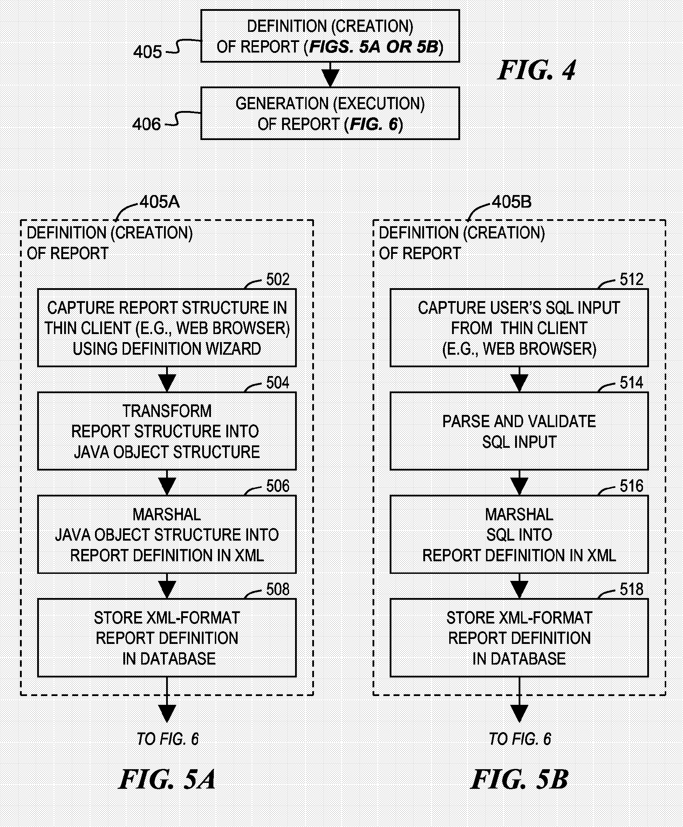

FIG. 4 is a high-level flowchart illustrating the step 405 of defining (creating) and the step 406 of generating (executing) a report:

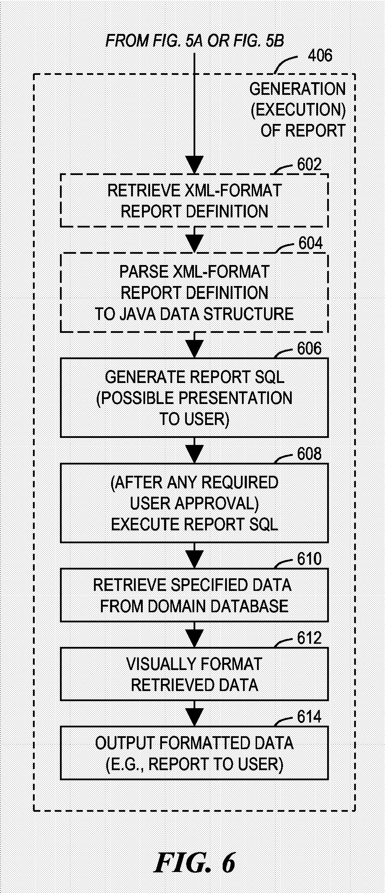

• FIGS. 5A and 5B are flowcharts of first and second embodiments 405A, 405B of a method 405 of defining (creating) reports whose definition are in XML format, using a thin client 200 such as a web browser. FIG. 5A's method involves definition wizard 314, and FIG. 5B's method involves direct SQL entry.

• FIG. 6 is a flowchart of an embodiment of a method 406 generating (executing) a report whose definition was stored in XML format, the method involving direct SQL creation and execution from a thin client (for example, browser without any plug-in).

It is recognized that the report definition (creation) process 405 and the report generation (execution) process 406 may be considered separate processes that may be used together as a single process, or separately as distinct processes.

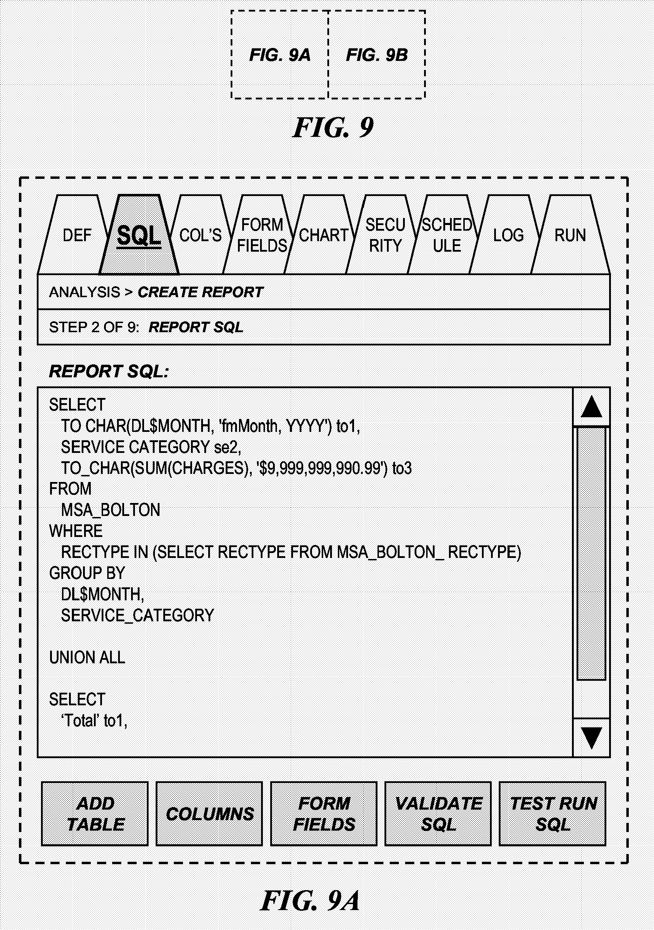

In the first embodiment of block 405, labeled 405A in FIG. 5A, report definition starts with block 502, which indicates capturing the user input through a user interface such as thin client 200. The user interface transmits data via a communication medium 210 such as the Internet, to definition wizard 314. In one embodiment, the user follows steps governed by definition wizard 314 to specify report requirements. The screen display in FIG. 9A shows tabs with DEF, COLUMNS, FORM FIELDS, CHART, SECURITY, SCHEDULE, LOG and RUN that correspond to steps in which the user may input report requirements. (Note that the SQL tab in FIG. 9A corresponds to an option in which the user may directly enter report requirements in SQL in block 512, rather than using the definition wizard 314 as in block 502.)

Block 504 indicates transformation of the report structure into a runtime (for example, Java) object structures so that it can be converted into XML definition later. This transformation step may be performed by the persistence engine 334 (FIG. 3).

Block 506 indicates the marshaling of the runtime (for example, Java) object structures into an XML document that thereafter serves as a Report Definition. The XML Report Definition may include, for example, data sources, selection criteria, filtering, sorting, visual formatting and cross-reference/drill-down information. One example of an XML Report Definition is shown in FIG. 7. This marshaling step may be performed by controller 320 and XML engine 352 (FIG. 3).

Block 508 indicates storage of the XML-format Report Definition. The XML-format Report Definition may be stored, for example, in a relational database such as analytical data storage element 362 (FIG. 3). This step may be performed by persistence engine 334 (FIG. 3).

This report definition procedure 502, 504, 506, 508 provides the ability to visually construct a report, to ultimately cause desired domain data from storage element 364 to be retrieved and presented (as described with reference to FIG. 6). The unique ability to for report definitions use a web browser (more generally, a thin client), without downloaded plug-ins or software classes and without additional client-side logic, provides many of the invention's advantages.

FIG. 5B is a high-level flowchart illustrating one embodiment of a process 405B by which reports are defined/created by allowing the user to directly write (see FIG. 9A) native database SQL from a thin client 100 (for example, a browser) for a specific report, instead of using the visual report builder (definition wizard 314).

Report definition starts with block 512, which indicates capturing the user input through a web-based wizard user interface. In particular, the user may directly type SQL queries into a thin client (web browser) 200 (FIGS. 2 and 3) in the client computer, which transmits data to the analytical programming server 250 via a communication medium 210 such as the Internet.

Block 514 indicates the parsing and validation of the SQL input that was entered by the user. This step may be performed by SQL builder 332 through intermediation of controller 320.

Block 516 indicates the marshaling of the SQL into an XML document that thereafter serves as a Report Definition (see example in FIG. 7). The XML Report Definition may include, for example, data sources, selection criteria, filtering, sorting, visual formatting and cross-reference/drill-down information. One example of an XML Report Definition is shown in FIG. 7. This marshaling step may be performed by controller 320 and XML engine 352.

Block 518 indicates storage of the XML-format Report Definition. The XML-format Report Definition may be stored, for example, in a relational database such as analytical data storage element 362. This step may be accomplished by persistence engine 334.

This report definition procedure 512, 514, 516, 518 provides the ability to visually construct the report, and for the user to directly write SQL to ultimately cause desired domain data from storage element 364 to be retrieved and presented (described with reference to FIG. 6). The unique ability to write SQL into a web browser (more generally, a thin client), without downloaded plug-ins or software classes and without additional client-side logic, provides many of the invention's advantages.

FIG. 6 steps 602, 604, 606, 608, 610, 612, 614 comprise an embodiment of a method 406 by which a report, which may have been defined by a user in accordance with block 405, is generated and executed.

The report generation process starts with block 602, which indicates retrieval of an XML-format Report Definition from database storage element 362. This step may be performed by the XML engine 352 (FIG. 3).

Block 604 indicates the parsing of the XML-format Report Definition into a Java data structure. This step may be performed by controller 320 (FIG. 3).

Blocks 602 and 604 are drawn with dashed lines to indicate that they are optional. For example, when report definition step 405 is performed at the same time as report generation step 406 (FIG. 4), it may be assumed that the Report Definition is retained in memory so that it need not be retrieved from the database or parsed into a runtime (for example, Java) data structure.

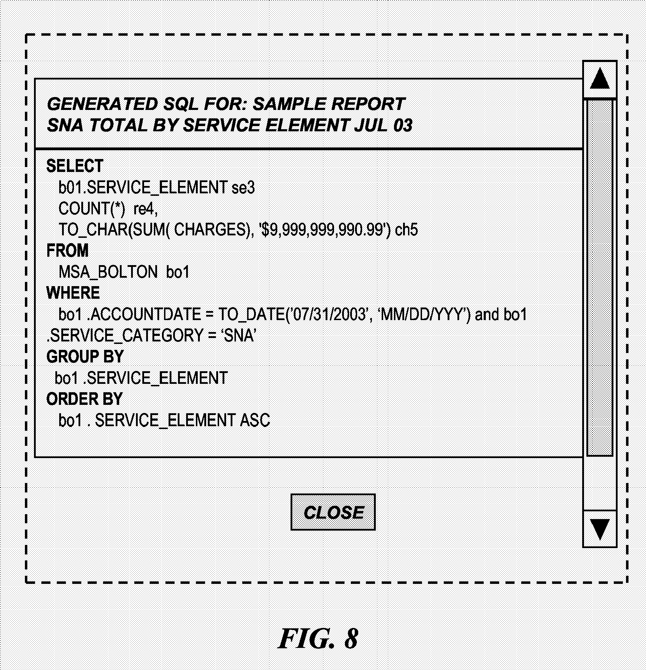

Block 408 indicates the generation of "Report SQL" (see example in the FIG. 8 screen display). The Report SQL is based on the runtime (for example, Java) data structure.

Optionally, the Report SQL may be presented to the user for approval. In this manner, the user may confirm that the SQL that is generated in fact will carry out the query that he desires. If the user does not approve of the generated SQL, then the definition process 405 may be started again (this path, being easily implemented by those skilled in the art, is not specifically illustrated in the flowcharts). Assuming the user approves the generated SQL, control passes to block 608.

Block 608 indicates execution of the Report SQL that was generated in block 606. The SQL may be executed using this apparatus or any other SQL query tool. This step may be performed by SQL builder 332 (FIG. 3).

Block 610 indicates retrieving the desired data from domain database 364. This step may be performed by data retriever 336 (FIG. 3).

Block 612 indicates application of visual formatting and paging to the retrieved dataset. This step may be performed by output formatter 312 (FIG. 3).

Finally, block 614 indicates presentation to the user at thin client 200 (or other output of the report) in the output format that was specified in the Report Definition retrieved in step 602. This step may be performed by the output formatter 312 (FIG. 3).

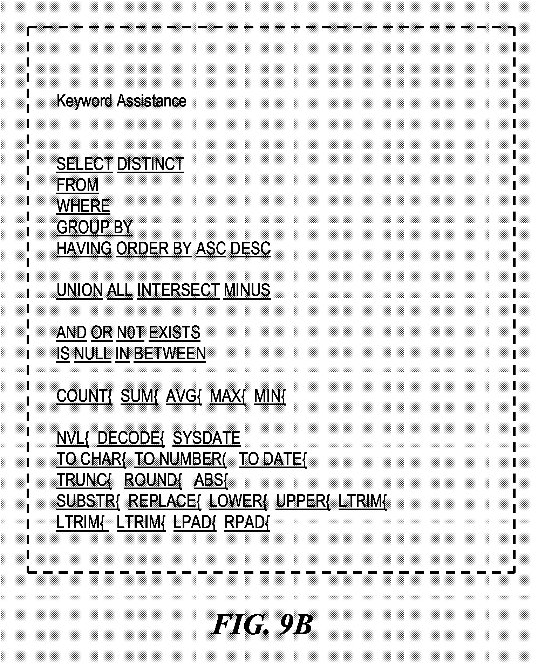

For illustration, FIGS. 7, 8, and 9A/9B show various screen displays that may be provided to a user on thin client 200. FIG. 7 shows one example of an XML-format Report Definition file of the type stored in blocks 508 or 518. FIG. 8 illustrates one example of SQL that is automatically generated from an XML-format Report Definition file (as in FIG. 6 block 606). FIG. 9 (illustrating the relationship of FIGS. 9A and 9B) is one example of a screen display through which SQL may be directly received from a user, to create and execute a report (see FIG. 5B). The FIG. 9A screen display also illustrates other "tabs" allowing a user to proceed stepwise through a report definition procedure such as one that may be governed by definition wizard 314 (see FIG. 5A block 502). The FIG. 9B screen display shows one example of an SQL keyword assistance tool that makes it easier for the user to insert valid SQL commands into the work area in FIG. 9A.

The foregoing arrangement allows business users and technically sophisticated users to create their own secure OLAP reports, and make them available to other system users using any hypertext transfer protocol (http) web browser. These abilities are provided without any plug-ins or downloaded control mechanisms. These abilities greatly increase productivity, and reduce OLAP/data warehouse development and operations cost by up to fifty percent.

The disclosed methods may be executed by any appropriate general purpose computer system(s) employing technology known by those skilled in the art to be appropriate to the functions performed. Appropriate software can readily be prepared by programmers based on the present teachings, using suitable programming languages operating with appropriate operating systems. Generally, such computers include at least one bus (including address, data, control) that connects various elements, including a processor for executing program instructions, memory for holding the program instructions and other data, disks and other storage devices for storing the program instructions and other information, computer readable media storing the program instructions, input and output devices, as well as various other elements such as ASICs, GALs, FPGAs, drivers, accelerators, DMA controllers, and the like. Such computer readable media constitute a computer program product including computer executable code or computer executable instructions that, when executed, causes the computer to perform the methods disclosed herein. Examples of computer readable media include hard disks, floppy disks, compact discs, DVDs, tape, magneto optical disks, PROMs (for example, EPROM, EEPROM, Flash EPROM), DRAM, SRAM, SDRAM, RDRAM, and the like.

From the foregoing, it will be apparent to those skilled in the art that a variety of methods, systems, computer programs on recording media, and the like, are provided.

For example, the foregoing description provides support for (FIGS. 5A, 5B) a method of forming a report definition file for governing access to or presentation of data from a database. The method may involve inputting from a thin client, a set of report specifications; and converting the set of report specifications into the report definition file, the report definition file being in a format defined by a markup language having user definable tags and that describes a relationship between a document's content and structure.

The thin client may consist essentially of a world wide web browser.

The markup language may be extensible markup language (XML).

The method may further involve storing (508, 518) the report definition file for use in a subsequent report output method.

The inputting step may involve inputting (502) the report specifications using an report definition wizard (314) that guides a user with report definition options.

The method may further involve transforming (504) the report specifications into a runtime data structure; and marshaling (506) the runtime data structure into the report definition file that may be in extensible markup language (XML).

The inputting step may involve inputting (512) the report specification in the form of standard query language (SQL) commands entered through the thin client.

The method (FIG. 5B) may further involve parsing and validating (514) the SQL commands; and marshaling (516) the SQL commands into the report definition file that may be in extensible markup language (XML).

The present disclosure also provides support (FIG. 5A or 5B, adding FIG. 6 without 602, 604 retrieving report definition file) for a method of outputting data from a database in a report governed by a report definition file, including the report definition file forming method described above, and may further involve converting (606) the report definition file to a report file expressed in commands of a database query language (SQL); retrieving (610) the data from the database in accordance with the report file; and outputting (614) the retrieved data in a format governed at least in part by the report file.

The present disclosure further provides support (FIG. 6) for a method of outputting data from a database in a report governed by a report defmition file. The method may involve retrieving (602) the report definition file, the report definition file being in a format defined by a markup language (XML) having user definable tags and that describes a relationship between a document's content and structure; converting (604+606) the report definition file to a report file expressed in commands of a database query language (SQL); retrieving (608+610) the data from the database in accordance with the report file; and outputting (614) the retrieved data in a format governed at least in part by the report file.

The database query language may be standard query language (SQL).

The markup language may be extensible markup language (XML).

The method may further involve presenting the (SQL) report file to the user; and obtaining an input indicating the user's approval of the report file.

The present disclosure further provides support for a computer program product including computer executable code or computer executable instructions that, when executed, causes a computer to perform the methods described herein.

The present disclosure also provides support for a system configured to perform the methods described herein.

The present disclosure further provides support (FIG. 3) for an arrangement for outputting data from a domain database (364) in a report governed by a report definition file that may be in XML format. The arrangement may include a definition wizard (314) configured to provide report definition options to a thin client (200), and to input user selections through the thin client that govern creation of the report definition file; an SQL builder (332) configured to construct Standard Query Language (SQL) based on definition attributes generated from user inputs; an XML engine (352) configured to store, retrieve, transform, and process the XML-format report definition file based on either the definition wizard or the SQL builder; and a data retriever (336) configured to assemble and generate the data from the domain database in accordance with the report definition file.

The foregoing description further supports a computer program product including computer executable code or computer executable instructions that, when executed, causes a computer to perform the methods described above.

Many alternatives, modifications, and variations will be apparent to those skilled in the art in light of the above teachings. For example, the relative location of elements such as servers, databases, database management systems, supporting software, and the like, may be varied while remaining within the scope of the present invention. Likewise, the steps involved in methods described herein may be implemented in a manner different than as described above. Moreover, it is recognized that elements may be located at different relative locations than as specifically disclosed herein. It is therefore to be understood that within the scope of the appended claims and their equivalents, the invention may be practiced otherwise than as specifically described herein.

## Claims

**1.** A method of forming a report definition file for governing access to or presentation of data from a database, the method comprising:
inputting from a thin client, a set of report specifications; and
converting the set of report specifications into the report definition file, the report definition file being in a format defined by a markup language having user definable tags and that describes a relationship between a document's content and structure.

**2.** The method of Claim 1, wherein:
the thin client consists essentially of a world wide web browser.

**3.** The method of Claim 1, wherein:
the markup language is extensible markup language (XML).

**4.** The method of Claim 1, further comprising:
storing the report definition file for use in a subsequent report output method.

**5.** The method of Claim 1, wherein the inputting step includes:
inputting the report specifications using an report definition wizard that guides a user with report definition options.

**6.** The method of Claim 5, further comprising:
transforming the report specifications into a runtime data structure; and
marshaling the runtime data structure into the report definition file that is in extensible markup language (XML).

**7.** The method of Claim 1, wherein the inputting step includes:
inputting the report specification in the form of standard query language (SQL) commands entered through the thin client.

**8.** The method of Claim 7, further comprising:
parsing and validating the SQL commands; and
marshaling the SQL commands into the report definition file that is in extensible markup language (XML).

**9.** A method of outputting data from a database in a report governed by a report definition file, including the report definition file forming method of Claim 1, and further comprising:
converting the report definition file to a report file expressed in commands of a database query language (SQL);
retrieving the data from the database in accordance with the report file; and
outputting the retrieved data in a format governed at least in part by the report file.

**10.** A method of outputting data from a database in a report governed by a report definition file, the method comprising:
retrieving the report definition file, the report definition file being in a format defined by a markup language (XML) having user definable tags and that describes a relationship between a document's content and structure;
converting the report definition file to a report file expressed in commands of a database query language (SQL);
retrieving the data from the database in accordance with the report file; and
outputting the retrieved data in a format governed at least in part by the report file.

**12.** The method of Claim 11, wherein:
the database query language is standard query language (SQL).

**13.** The method of Claim 11, wherein:
the markup language is extensible markup language (XML).

**14.** The method of Claim 11, further comprising:
presenting the (SQL) report file to the user; and
obtaining an input indicating the user's approval of the report file.

**15.** A computer program product including computer executable code or computer executable instructions that, when executed, causes a computer to perform the method of Claim 1.

**16.** A computer program product including computer executable code or computer executable instructions that, when executed, causes a computer to perform the method of Claim 9.

**17.** A computer program product including computer executable code or computer executable instructions that, when executed, causes a computer to perform the method of Claim 10.

**18.** A system configured to perform the method of Claim 1.

**19.** A system configured to perform the method of Claim 10.

**20.** An arrangement for outputting data from a domain database in a report governed by a report definition file that is in XML format, the arrangement comprising:
a definition wizard configured to provide report definition options to a thin client, and to input user selections through the thin client that govern creation of the report definition file;
an SQL builder configured to construct Standard Query Language (SQL) based on definition attributes generated from user inputs;
an XML engine configured to store, retrieve, transform, and process the XML-format report definition file based on either the definition wizard or the SQL builder; and
a data retriever configured to assemble and generate the data from the domain database in accordance with the report definition file.
